# EUROPÄISCHE PATENTANMELDUNG

(11) **EP 0 553 657 A1**
(43) Veröffentlichungstag der Anmeldung: **04.08.1993**
(21) Anmeldenummer: 93100518.5
(22) Anmeldetag: 15.01.1993
(51) Int. Cl.: E03D 11/13, F16L 47/06

(54) **Rohranschlussstück**

(30) Priorität: 18.01.1992 DE 9200548 U
(71) Anmelder: Ricker, Heinz, D-49577 Kettenkamp (DE)
(72) Erfinder: Ricker, Heinz, D-49577 Kettenkamp (DE)
(74) Vertreter: Stracke, Alexander, Dipl.-Ing.

(57) **Zusammenfassung**

2.1 Es soll ein Rohranschlußstück (10) in Form eines geraden Rohrstückes oder eines Bogens so gestaltet werden, daß der gegenüber der Fläche des fertigen Fußbodens oder der Innenfläche der fertigen Wand gegebenenfalls noch vorstehende Bereich schwanken kann, ohne daß das Rohranschlußstück (10) angepaßt werden muß.

2.2 Zur Verbindung des Abgangsstutzens einer Sanitäreinrichtung mit einer Abflußrohrleitung (11) bei der den Abgangsstutzen übergreifende Bereich des Rohranschlußstückes (10) als Muffe (13) ausgebildet ist, ist vorgesehen, daß der der Muffe (13) des Rohranschlußstückes (10) abgewandte Verbindungsbereich des Rohranschlußstückes (10) mit der Abflußrohrleitung (11) als Versatzstück (14) ausgebildet ist, welches nach innen verspringt, so daß dieser Bereich in den glattwandigen, dem Nenndurchmesser der Abflußrohrleitung (11) entsprechenden Endbereich einsteckbar ist. Das Versatzstück (14) ist mit einer nach außen offenen und umlaufenden Nut (15) versehen, in die ein Dichtring (16) eingesetzt ist.

2.3 Das erfindungsgemäße Rohranschlußstück (10) ist besonders zur Strömungsverbindung zwischen dem Abgangstutzen eines WC oder eines BD mit der fest im Baukörper installierten Abflußrohrleitung (11) verwendbar.

## Beschreibung

Die vorliegende Erfindung betrifft ein Rohranschlußstück zum leitenden Verbinden des Abgangsstutzens einer Sanitäreinrichtung, wie z.B. ein WC-Becken, ein Bidet, ein Urinal od.dgl., mit einer im Baukörper fest installierten Abflußrohrleitung, wobei der den Abgangsstutzen übergreifende Bereich des Rohranschlußstückes als Muffe ausgebildet ist.

Das in Rede stehende Rohranschlußstück kann als Bogen oder als geradliniges Stuck ausgebildet sein. Die jeweils verwendete Form hängt nicht nur davon ab, ob der Abgangsstutzen der Sanitäreinrichtung vertikal oder horizontal liegt, sondern auch ob die Abflußrohrleitung durch einen Durchbruch der Decke eines Gebäudes geführt ist oder in einem Schlitz einer Wand verlegt ist. Die bisher bekannten Rohranschlußstücke sind so gestaltet, daß das dem Abgangsstutzen der Sanitäreinrichtung abgewandt liegende Ende glattflächig ausgebildet ist, d.h. der Innendurchmesser im Verbindungsbereich mit der Abflußrohrleitung entspricht dem Nenndurchmesser der Abflußrohrleitung. Dazu ist es notwendig, daß das den Endbereich des Rohranschlußstückes übergreifende Ende der Abflußrohrleitung als Muffe ausgebildet ist, d.h. durch eine Vergrößerung des Querschnittes bzw. durch eine Vergrößerung des Durchmessers übergreift die Abflußrohrleitung das Rohranschlußstück. Zur Abdichtung des Verbindungsbereiches ist innenseitig in die Muffe ein Dichtring eingesetzt.

Damit der Verbindungsbereich auch abgedichtet ist, ist es zwingend notwendig, daß die Abflußrohrleitung mit dem als Muffe ausgebildeten Endbereich maßgerecht verlegt wird, d.h. der freie Rand muß in einem vorgegebenen Abstand zum Abgangsstutzen der Sanitäreinrichtung stehen. Da nun die Abflußrohrleitungen im Zuge der Rohbauinstallationen verlegt werden, ist es in der Praxis unmöglich, da die Höhe des Estrichs und die Dicke des Fußbodenbelages oder die Dicke der Putzschicht und der angesetzten Fliesen rein theoretische Werte sind, bedingt durch die unvermeidbaren Toleranzen. Aus diesen Umständen ergibt sich, daß die Rohrabschlußstücke zwar in die Muffe der Abflußrohrleitung passen, daß sie jedoch häufig entweder zu lang oder zu kurz sind, so daß eine umständliche Anpassung notwendig ist. Gleichgültig ob die Muffe der Abflußrohrleitung aus dem Boden oder aus der Wand kommt, braucht man ein Rohrstück mit Muffe. Dazu ist es notwendig, daß ein Rohr gemäß der gelieferten Länge gekürzt werden muß. Das Restrohr ohne Muffe ist dann im Zuge der Installation nicht mehr verwendbar.

Der vorliegenden Erfindung liegt die Aufgabe zugrunde, ein Rohranschlußstück der gattungsgemäßen Art so zu gestalten, daß der gegenüber der Fläche des fertigen Fußbodens oder der Innenfläche der fertigen Wand gegebenenfalls noch vorstehende Bereich schwanken kann, ohne daß das Rohranschlußstück angepaßt werden muß.

Die gestellte Aufgabe wird gelöst, indem der der Muffe des Rohranschlußstückes abgewandte Verbindungsbereich des Rohranschlußstückes mit der Abflußrohrleitung als ein nach innen verspringendes und umlaufendes sowie im Durchmesser gegenüber dem Nenndurchmesser der Abflußrohrleitung verringertes Versatzstück derart ausgebildet ist, daß dieser Bereich in den glattwandigen, dem Nenndurchmesser der Abflußrohrleitung entsprechenden Endbereich einsteckbar ist.

Durch die Verwendung des erfindungsgemäßen Rohranschlußstückes ist es nunmehr nicht mehr notwendig, daß die Abflußrohrleitung im Verbindungsbereich mit dem Rohranschlußstück als Muffe ausgebildet ist, da durch das sinngemäß wie ein im Durchmesser verringerter Ansatz zu sehendes Versatzstück die Möglichkeit besteht, es in ein glattflächig ausgebildetes Ende der Abflußrohrleitung einzustecken. Die Höhe bzw. Länge des nach innen verspringenden Versatzstückes des Rohranschlußstückes kann so groß gewählt werden, daß auch bei extrem großen Schwankungen bei den Maßen des Überstandes der Abflußrohrleitung eine Anpassung entfällt. Die Aufrüstung der Sanitäreinrichtung ist dadurch wesentlich vereinfacht. Ferner ist noch vorteilhaft, daß als Teilstück der Abflußrohrleitung an beiden Stirnenden glattflächige Abfälle von Rohren verwendet werden können, da auf das dem Verbindungsbereich mit dem Rohranschlußstück abgewandt liegende Ende dann ein Rohr aufgesteckt werden kann, welches an einem Ende als Muffe ausgebildet ist. Durch die erfindungsgemäße Gestaltung des einen Endes des Rohranschlußstückes wird auch erreicht, daß dieses von der Abflußrohrleitung umgriffen wird, wie es für die fachgerechte Installation notwendig ist. In weiterer Ausgestaltung ist vorgesehen, daß innerhalb des nach innen verspringenden Versatzes des Rohranschlußstückes eine nach außen offene und umlaufende Nut vorgesehen ist, in die ein den Verbindungsbereich zwischen dem Rohranschlußstück und der Abflußrohrleitung abdichtender Dichtring einsetzbar ist. Im Gegensatz zu der Muffenverbindung gemäß dem Stand der Technik liegt bei dieser Ausführung der Dichtring außen an dem Anschlußrohrstück.

Vorteilhafte Weiterbildungen des erfindungsgemäßen Rohranschlußstückes sind in weiteren Unteransprüchen aufgezeigt und ergeben sich aus der nachfolgenden Beschreibung eines bevorzugten Ausführungsbeispiels.

Es zeigt:

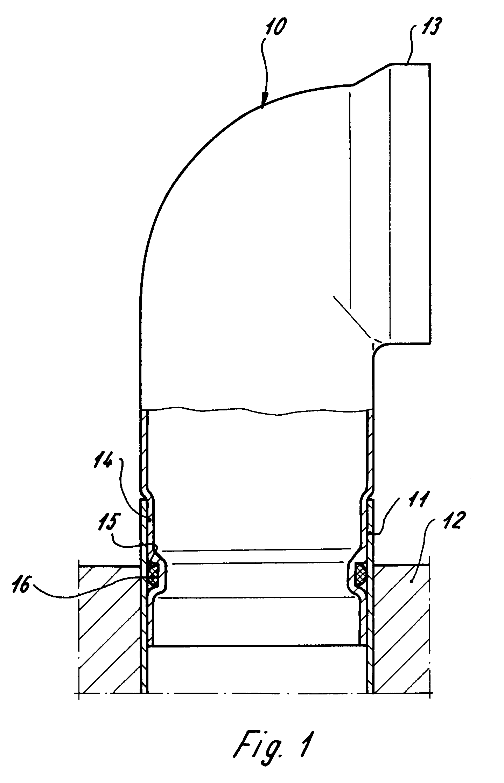

- Figur 1: ein erfindungsgemäßes, bogenförmig ausgebildetes Rohranschlußstück in Verbindung mit einer die Dicke eines Gebäudes durchdringenden Abflußrohrleitung.

Die in der Figur 1 dargestellte Einheit besteht aus dem erfindungsgemäßen Rohranschlußstück 10, einer teilweise dargestellten, vertikalen Abflußrohrleitung 11 und einer andeutungsweise dargestellten Decke 12 eines Gebäudes die mit einer Öffnung versehen ist, die von der Abflußrohrleitung 11 durchdrungen ist. Im dargestellten Ausführungsbeispiel ist das Rohranschlußstück 10 als ein Bogen ausgebildet. An dem freien, d. h. der Abflußrohrleitung 11 abgewandten Ende ist das Rohranschlußstück 10 als eine den Querschnitt vergrößernde Muffe 13 ausgebildet, die den horizontalen Abgangsstutzen eines nicht dargestellten Klossetts im montierten Zustand übergreift.

An dem der Muffe 13 abgewandten Ende ist das Rohranschlußstück 10 als ein nach innen verspringendes Versatzstück 14 ausgebildet. Dieses Versatzstück 14 ist sinngemäß auch wie ein Reduzierstück zu sehen, da der Durchmesser und somit auch der Querschnitt gegenüber dem Nenndurchmesser der Abflußrohrleitung 11 verringert ist. Das Versatzstück 14 bildet den Verbindungsbereich zwischen dem Rohranschlußstück 10 und der Abflußrohrleitung 11. Die Verringerung des Durchmessers bzw. die Größe des Versatzes entspricht in etwa der Dicke der Wandung des Rohranschlußstückes 10, so daß die Außenfläche der Abflußrohrleitung 11 mit der Außenfläche des sich anschließenden, geradlinigen Teilstückes des Rohranschlußstückes 10 fluchtet. Zur Abdichtung des Verbindungsbereiches zwischen dem Rohranschlußstück 10 und der Abflußrohrleitung 11 ist innerhalb des Versatzstückes 14 des Rohranschlußstückes 11 eine nach außen offene und umlaufende Nut 15 vorgesehen, in die ein Dichtring 16 eingesetzt ist. Die Nut 16 ist durch eine Einziehung gebildet, so daß in diesem Bereich der Querschnitt des Versatzstückes 14 nochmals reduziert wird. Diese Reduzierung ist jedoch unbedeutend, da üblicherweise der Nenndurchmesser derartiger Rohranschlußstücke 100mm beträgt.

Aus der Figur ergibt sich, daß es unbedeutend ist, um welchen Betrag die obere Kante der Abflußrohrleitung 11 gegenüber der oberen Fläche der Decke 12 vorsteht, da daß Rohranschlußstück 11 innerhalb eines weiten Bereiches gegenüber der Abflußrohrleitung 11 verschiebbar ist, so daß der notwendige Höhenversatz zwischen der Decke 12 und der nicht dargestellten Sanitäreinrichtung immer erreicht werden kann. Die Figur 1 zeigt außerdem, daß bei dieser Ausführung das Rohranschlußstück 10 die Dichtung 16 trägt. Im Gegensatz zu der dargestellten Ausführung ist es auch denkbar, daß das Rohranschlußstück 10 geradlinig ist, wenn beispielsweise die anzuschließende Sanitäreinrichtung einen vertikalen Abgangsstutzen beinhaltet oder wenn die Abflußrohrleitung 11 im Schlitz einer Wand verlegt ist. Besonderer Bedeutung kommt dem Rohranschlußstück 10 bei der Installation von Urinalen zu, wo es zwingend notwendig ist, daß die obere Kante der Abflußrohrleitung 11 mit der Außenfläche des Wandbelages fluchtet.

## Patentansprüche

1. Rohranschlußstück zum leitenden Verbinden des Abgangsstutzens einer Sanitäreinrichtung, wie z. B. ein WC, ein Bidet, ein Urinal od. dgl. mit einer im Baukörper fest installierten Abflußrohrleitung, wobei der den Abgangsstutzen übergreifende Bereich des Rohranschlußstückes als Muffe ausgebildet ist, **dadurch gekennzeichnet,** daß der der Muffe (13) des Rohranschlußstückes (10) abgewandte Verbindungsbereich des Rohranschlußstückes (10) mit der Abflußrohrleitung (11) als ein nach innen verspringendes und umlaufendes sowie im Durchmesser gegenüber dem Nenndurchmesser der Abflußrohrleitung (11) verringertes Versatzstück (14) derart ausgebildet ist, daß dieser Bereich in den glattwandigen, dem Nenndurchmesser der Abflußrohrleitung (11) entsprechenden Endbereich einsteckbar ist.

2. Rohranschlußstück nach Anspruch 1, dadurch gekennzeichnet, daß innerhalb des Versatzstückes (14) des Rohranschlußstückes (10) eine nach außen offene und umlaufende Nut (15) vorgesehen ist, in die ein den Verbindungsbereich zwischen dem Rohranschlußstück (10) und der Abflußrohrleitung (11) abdichtender Dichtring (16) einsetzbar ist.

3. Rohranschlußstück nach Anspruch 1, dadurch gekennzeichnet, daß das Rohranschlußstück (11) als Bogen ausgebildet ist, und an der dem Versatzstück (14) gegenüberliegenden Seite als Muffe (13) ausgebildet ist.

4. Rohranschlußstück nach einem oder mehreren der vorhergehenden Ansprüche 1 bis 3, dadurch gekennzeichnet, daß im Bereich des Versatzstückes (14) die Wandung des Rohranschlußstückes (10) um etwa die Dicke der Rohrwandung nach innen verspringt.

5. Rohranschlußstück nach einem oder mehreren der vorhergehenden Ansprüche 1 bis 4, dadurch gekennzeichnet, daß bei einem bogenförmig ausgebildeten Rohranschlußstück (11) die Längen des Versatzstückes (14) und des sich anschließenden geradlinigen Teilstückes übereinstimmen oder in etwa übereinstimmen.
